# EUROPÄISCHE PATENTANMELDUNG

(11) **EP 4 848 131 A1**
(43) Veröffentlichungstag der Anmeldung: **02.12.2026**
(21) Anmeldenummer: 26180514.7
(22) Anmeldetag: 22.05.2026
(51) Int. Cl.: G06F 21/88, G08B 13/14, H04W 4/02, G06F 21/55

(54) **ÜBERWACHUNGSKOMPONENTE FÜR EIN UNBEAUFSICHTIGTES ENDGERÄT**

(30) Priorität: 28.05.2025 DE 102025120819
(71) Anmelder: Secunet Security Networks Aktiengesellschaft, 45138 Essen (DE)
(72) Erfinder: Wappenschmidt, Armin, 21029 Hamburg (DE)
(74) Vertreter: Andrejewski - Honke Patent- und Rechtsanwälte Partnerschaft mbB

(57) **Zusammenfassung**

Eine Überwachungskomponente (1) zur Überwachung eines Endgeräts (2) umfasst ein Befestigungselement (4) zu Befestigung an einem Endgerät (2). Das Befestigungselement (4) ist so ausgebildet, dass sich Bewegungen des Endgeräts (2) auf die Überwachungskomponente (1) übertragen. Die Überwachungskomponente (1) weist einen Bewegungssensor (3) auf. Der Bewegungssensor (3) ist ausgebildet, Bewegungen der Überwachungskomponente (1) bzw. des Endgeräts (2) zu erfassen.

## Beschreibung

Die Erfindung betrifft eine Überwachungskomponente zur Überwachung eines Endgeräts, wobei die Überwachungskomponente einen Bewegungssensor umfasst, wobei der Bewegungssensor ausgebildet ist, Bewegungen der Überwachungskomponente zu erfassen, wobei die Überwachungskomponente ein Befestigungselement zur Befestigung an dem Endgerät umfasst. Die Erfindung betrifft außerdem ein Endgerätsystem umfassend ein Endgerät und eine Überwachungskomponente sowie ein Verfahren zur Überwachung eines Endgeräts.

Insbesondere ist die Erfindung auf das Szenario eines zurückgelassenen Endgeräts - beispielsweise eines Laptops oder Tablets - bezogen, welches vor allem aufgrund seiner Größe zum Beispiel in einem Hotelzimmer zurückgelassen wurde. In diesem Zeitraum verschafft sich ein Eindringling - eine "evil maid" - Zutritt zu dem Endgerät und versucht über das Endgerät an Informationen zu gelangen. Der Evil-Maid-Angreifer kann sich - beispielsweise per Bootloader - einen administrativen Zugriff auf dem Endgerät verschaffen, um auf diese Weise eine Schadsoftware zu installieren. Die Schadsoftware kann u.a. einen eigenen Software-Keylogger aufweisen.

Sobald der Nutzer an sein Endgerät zurückkehrt und sein Passwort eingibt, werden die Tastenanschläge bzw. wird das Passwort von dem Software-Keylogger protokolliert. Lässt der Nutzer das Endgerät abermals zurück, so kann der Evil-Maid-Angreifer zurückkehren, das Passwort aus der Schadsoftware bzw. dem Keylogger auslesen und den Inhalt der verschlüsselten Festplatte kopieren und entwenden. Im Falle der Anbringung eines Hardware-Keyloggers kann dieser eine Antenne umfassen und die protokollierten Tastenanschläge per Funk übermitteln. Somit kann der Hardware-Keylogger durch die Funkkommunikation auch eine zwangsverschlüsselte Kommunikation des Endgeräts umgehen, so dass es nicht einmal eines zweiten physischen Kontakts zwischen der evil maid und dem Endgerät bedarf.

In US 9,379,892 B2 ist eine Überwachungskomponente in Form einer "police bridge" offenbart, welche zwischen der Northbridge und der Southbridge eines Mainboards angeordnet ist. Sämtliche von außen kommende oder nach außen fließende Kommunikation wird somit - vor allem durch die Anordnung der "police bridge" - durch dieselbe gezwungen. Die Überwachungskomponente bzw. police bridge überwacht somit die gesamte Buskommunikation des Mainboards und hat dementsprechend eine Torwächterfunktion inne. Die Implementierung der Überwachungskomponente ist derart gestaltet, dass nur vorauthorisierte Kommunikation von vorauthorisierten Komponenten den Weg zur Northbridge passieren darf. Nicht vorauthorisierte Komponenten wie etwa Bootloader können daher nicht mit der Northbridge bzw. dem Prozessor kommunizieren. Im Falle des Versuchs einer Kommunikation einer nicht vorauthorisierten Komponente mit der Northbridge bzw. dem Prozessor geht von der Überwachungskomponente ein Warnsignal aus.

Nachteilig an der bekannten Lösung ist allerdings, dass eine Überwachung der Kommunikation mit Hilfe der bekannten Überwachungskomponente sehr aufwendig ist. Zum einen bedarf es der Bereitstellung der Überwachungskomponente ab Werk auf dem Mainboard, so dass für die zu überwachenden Endgeräte nur ein ganz spezieller und dementsprechend kostspieliger bzw. wenig variantenreicher Mainboardtyp eingesetzt werden kann. Zum anderen bedarf es einer aufwendigen Verwaltung der Überwachungskomponente, bei der alle mit dem Prozessor kommunizierenden Komponenten vorauthorisiert bzw. registriert werden müssen. Und schließlich können Keyloggerdie Tasteneingaben rein passiv abhören, ohne dass sie aktiv an der Buskommunikation beteiligt sind und die Überwachungskomponente überhaupt eine Chance hat, den Keylogger zu bemerken.

Der Erfindung liegt daher die Aufgabe zugrunde, eine - insbesondere auf Evil-Maid-Angriffe abzielende - Überwachungskomponente bereitzustellen, die einen geringeren Aufwand in der Herstellung und in der Verwaltung auslöst und auch Keylogger-Angriffe erkennen kann.

Diese Aufgabe wird gelöst durch eine Überwachungskomponente zur Überwachung eines Endgeräts, wobei die Überwachungskomponente ein Befestigungselement zur Befestigung an einem Endgerät umfasst, wobei das Befestigungselement so ausgebildet ist, dass sich Bewegungen des Endgeräts auf die Überwachungskomponente übertragen, dadurch gekennzeichnet, dass die Überwachungskomponente einen Bewegungssensor aufweist, wobei der Bewegungssensor ausgebildet ist, Bewegungen der Überwachungskomponente bzw. des Endgeräts zu erfassen.

Der Erfindung liegt zunächst die Erkenntnis zugrunde, dass durch das Vorsehen eines Bewegungssensors verdächtige Bewegungen erfasst und protokolliert werden können. Es wurde gefunden, dass die Überwachungskomponente die Überwachungsdaten abspeichern und spätestens bei Rückkehr des rechtmäßigen Nutzers bzw. des Analysegeräts Verdachts- bzw. Warnmeldungen an den Nutzer bzw. an das Analysegerät übertragen kann. Insbesondere kann die Überwachungskomponente so ausgebildet sein, dass sie bereits bei Erfassung der verdächtigen Bewegung ein Warnsignal - etwa an ein Analysegerät und/oder an eine Leitstelle - ausgeben kann.

Der Nutzer des Analyse- sowie des Endgeräts kann hierdurch rechtzeitig von der mutmaßlichen Manipulation erfahren und - beispielsweise - die IT-Abteilung kontaktieren, um mit dieser das weitere Vorgehen bezüglich des Endgeräts abstimmen. Auf diese Weise kann insbesondere verhindert werden, dass der Nutzer sich nichtsahnend erneut am Endgerät anmeldet, dort sein Passwort eingibt und Evil-Maid-Angreifer in den Besitz des Passworts gelangt.

Es wurde gefunden, dass es aufgrund der Protokollierung von Bewegungsdaten keinerKommunikationsüberwachung und damit auch keiner Vorauthorisierung von Komponenten mehr bedarf. Aufgrund des Wegfalls der Vorauthorisierung sämtlicher Buskommunikation können die Endgeräte auf eine sehr effiziente Weise jederzeit mit einer Überwachungskomponente nachgerüstet werden, ohne dass ein größerer Verwaltungsaufwand für die elektronische Kommunikation anfiele.

Der Erfindung liegt ferner die Erkenntnis zugrunde, dass die erfindungsgemäße Überwachungskomponente beispielsweise als USB-Stick ausgebildet sein kann, wodurch sich der Herstellungsaufwand gegenüber speziellen, mit einer Überwachungskomponente ausgestatteten Mainboards deutlich verringert. Die hiermit vorgeschlagene Überwachungslösung ist im Ergebnis sehr effizient bzw. aufwandsarm hergestellt und erlaubt außerdem einen flexiblen sowie aufwandsarmen Einsatz hinsichtlich der Kommunikationsverwaltung für sämtliche, zu schützende Endgeräte. Die eingangs genannte Aufgabe wurde somit gelöst.

Der Begriff "Endgerät" meint vorzugsweise ein elektronisches Gerät für einen Nutzer. Vorzugsweise ist das Endgerät ausgebildet, von einem Nutzer bedient zu werden bzw. von einem Nutzer als elektronisches Arbeitsgerät benutzt zu werden. Vorzugsweise ist das Endgerät als ein mobiles Endgerät ausgebildet.

Das mobile Endgerät ist beispielsweise als Laptop oder Tablet ausgebildet. Mit Vorteil wiegt das Endgerät bzw. mobile Endgerät wenigstens 150 bzw. 200 bzw. 250 g. Vorzugsweise beläuft sich ein Gewicht des Endgeräts bzw. mobilen Endgeräts auf höchstens 10,0 bzw. 7,0 bzw. 5,0 bzw. 3,0 kg.

Der Ausdruck "Befestigungselement" meint vorzugsweise, dass das Befestigungselement zur reversiblen Befestigung an dem Endgerät ausgebildet ist. Es ist sehr bevorzugt, dass das Befestigungselement als Steckelement zur Ausbildung einer Steckverbindung mit dem Endgerät ausgestaltet ist. Es ist möglich, dass das Befestigungselement eine Klebefläche zur Befestigung an dem Endgerät umfasst. Das Befestigungselement kann ein magnetisches Element zur Befestigung an dem Endgerät aufweisen. Die Überwachungskomponente weist bevorzugt ein Gehäuse auf.

Es ist sehr bevorzugt, dass das Befestigungselement eine starre Verbindung zwischen dem Endgerät und der Überwachungskomponente bzw. dem Bewegungssensor bzw. einem/dem Gehäuse der Überwachungskomponente herstellt, sodass sich eine Bewegung des Endgeräts direkt auf die Überwachungskomponente bzw. den Bewegungssensor bzw. ein/das Gehäuse der Überwachungskomponente überträgt. Vorzugsweise ist das Befestigungselement bzw. das Steckelement der Überwachungskomponente starr mit dem Gehäuse der Überwachungskomponente verbunden. Als Befestigungselement kann beispielsweise ein Kabel betrachtet werden, welches allerdings keine starre Befestigung des Bewegungssensors an dem Endgerät bietet, sodass sich die Bewegungen des Endgeräts nur bedingt auf die Überwachungskomponente übertragen. Es ist sehr bevorzugt, dass das Befestigungselementder Überwachungskomponente eine Befestigung an dem Endgerät ermöglicht, welche starrer ist als die Befestigung über ein Kabel.

Gemäß einer sehr bevorzugten Ausführungsform umfasst der Bewegungssensor einen Beschleunigungssensor und vorzugsweise einen Integrator zur Bestimmung einer Bewegung bzw. Geschwindigkeit aus einer erfassten Beschleunigung. Dies bewirkt, dass der Bewegungssensor nicht als Ortssensor (z.B. GPS-Sensoren oder Ultrabreitband-Sensoren) ausgebildet ist, welcher hinsichtlich der Erfassung von mit der Hand bewegten Gegenständen relativ ungenau ist. Es ist sehr bevorzugt, dass der Bewegungssensor wenigstens in zwei und vorzugsweise in drei Raumrichtungen Beschleunigungen bzw. Bewegungen ermittelt. Es ist von Vorteil, dass der Bewegungssensor bzw. Beschleunigungssensor in wenigstens einer bzw. zwei bzw. drei der Raumrichtungen jeweils in vorwärts- und in Rückwärtsrichtung (z.B. oben und unten der ersten Raumrichtung, recht uns links der zweiten Raumrichtung, vorne und hinten der dritten Raumrichtung) Beschleunigungen bzw. Bewegungen ermittelt.

Der Bewegungssensorbzw. Beschleunigungssensor umfasst vorzugsweise ein Mikro-Elektro-Mechanisches System (MEMS). Mit Vorteil weist der Bewegungssensorbzw. Beschleunigungssensor wenigstens einen Biegesteg je Raumrichtung auf, wobei der Biegesteg vorzugsweise Silizium umfasst. Mit Vorteil weist der Bewegungssensor bzw. Beschleunigungssensor wenigstens einen Referenzpunkt je Raumrichtung auf. Vorteilhafterweise erfasst der Bewegungssensorbzw. Beschleunigungssensor eine Kapazität zwischen dem Biegesteg und dem Referenzpunkt einer Raumrichtung, um eine Beschleunigung in einer Raumrichtung zu ermitteln. Vorzugsweise umfasst der Bewegungssensor bzw. Beschleunigungssensor wenigstens zwei bzw. drei Biegestege.

Mit Vorteil weist die Überwachungskomponente bzw. das Befestigungselement eine Endgerätschnittstelle zum Empfangen von Strom und/oder zum Austausch von Daten zwischen dem Endgerät und der Überwachungskomponente auf. Dies bewirkt eine besonders einfache Verbindung, die gleichzeitig eine mechanische Kopplung sowie eine Datenverbindung bereitstellt. Besonders vorzugsweise umfasst das Befestigungselement ein Steckelement. Zweckmäßigerweise ist das Steckelement genormt. Besonders vorzugsweise ist das Steckelement als USB-Steckelement und weiter vorzugsweise als USB-Stecker ausgestaltet.

Es ist sehr bevorzugt, dass die Überwachungskomponente ausgebildet ist, unabhängig von einem Endgerät betreibbar zu sein, wobei die Überwachungskomponente vorzugsweise einen Prozessor und/oder ein Betriebssystem und/oder einen Akku umfasst. Hierdurch kann eine Überwachung insbesondere in Zeiträumen stattfinden, wenn das Endgerät ausgeschaltet ist. Gleichzeitig kann die Überwachungskomponente auf diese Weise sehr gut gesichert werden. Es ist sehr bevorzugt, dass der Akku bzw. die Überwachungskomponente so ausgebildet ist/sind, dass die Überwachungskomponente wenigstens 2 bzw. 4 bzw. 6 Stunden bei ausgeschaltetem Endgerät betreibbar ist. Es ist sehr bevorzugt, dass der Akku über die Endgerätschnittstelle aufladbar ist. Der Prozessor kann eine ARM-Architektur aufweisen.

Vorteilhafterweise umfasstdie Überwachungskomponente einen Speicher und vorzugsweise einen kryptographisch gesicherten Speicher. Der kryptographisch gesicherte Speicher ist vorzugsweise als *Secure Element* bzw. als manipulationssichere Hardwarekomponente - vorzugsweise gemäß *Secure Element Protection Profile* der GlobalPlatform Technology - standardisiert ausgebildet.

Es ist bevorzugt, dass die Überwachungskomponente bzw. der Speicher eine Logdatei aufweist. Mit Vorteil umfasst Überwachungskomponente einen Zeitgeber. Dies bewirkt, dass die Sensordaten bzw. Bewegungsdaten des Bewegungssensors erfasst und bevorzugt mit einem Nutzungsverhalten des rechtmäßigen Nutzers abgeglichen werden können. Insbesondere kann auf diese Weise ein Verdacht festgestellt bzw. erhärtet werden. Es ist bevorzugt, dass die Logdatei wenigstens einen Teil der von dem Bewegungssensor ermittelten Bewegungsdaten oder aus den Bewegungsdaten abgeleitete Daten über der von dem Zeitgeber definierten Zeit bzw. Uhrzeit erfasst. Vorzugsweise ist die Logdatei - beispielsweise per Blockchain - integritätsgesichert. Mit Vorteil ist das Betriebssystem auf dem Speicher gespeichert.

Es ist besonders von Vorteil, wenn die Überwachungskomponente eine - vorzugsweise kabellose - Analyseschnittstelle zur Verbindung mit einem Analysegerät und/oder mit einer Leitstelle aufweist. Dies ermöglicht die Bereitstellung eines Kommunikationskanals, der unabhängig von dem Endgerät ist. Die Analyseschnittstelle ist vorzugsweise als eine Funkschnittstelle und besonders vorzugsweise als eine Bluetooth-Schnittstelle ausgebildet. Vorzugsweise wird die Überwachungskomponente automatisch in einen Alarmbereitschaftsmodus versetzt, wenn die Verbindung zwischen der Analyseschnittstelle und dem Analysegerät abbricht.

Es ist sehr bevorzugt, dass die Überwachungskomponente mindestens einen weiteren Sensor umfasst, wobei der wenigstens eine, weitere Sensor einen Wärmefühler und/oder eine Kamera und/oder ein Mikrofon und/oder einen Endgerätdetektor aufweist. Dies bewirkt die Bereitstellung weitererSensordaten zwecks präziserer Verdachtsfeststellung. Der Endgerätdetektor detektiert vorzugsweise, ob ein Strom über das Steckelement fließt oder ob eine Spannung am Steckelement anliegt, so dass vorzugsweise ein Betriebszustand des Endgeräts detektierbar ist. Der Wärmefühler kann einen Infrarotdetektor aufweisen. Der Wärmefühler und/oder die Kamera und/oder das Mikrofon ist/sind vorzugsweise ausgebildet, die Anwesenheit einer Person zu detektieren.

Zweckmäßigerweise ist die Überwachungskomponente als Stick - insbesondere als ein USB-Stick - ausgebildet. Dies bewirkt ein unscheinbares Äußeres der Überwachungskomponente, sodass ein Angreifer gegenüber der Überwachungskomponente keinen Argwohn hegt. Es ist sehr bevorzugt, dass die Überwachungskomponente weniger als 150 bzw. 100 bzw. 70 bzw. 50 bzw. 30 bzw. 20 g wiegt. Mit Vorteil wiegt die Überwachungskomponente wenigstens 2 bzw. 4 bzw. 6 g. Zweckmäßigerweise beträgt eine Längsausdehnung der Überwachungskomponente wenigstens 10 bzw. 15 bzw. 20 mm. Mit Vorteil beläuft sich eine Längsausdehnung der Überwachungskomponente auf höchstens 100 bzw. 90 bzw. 70 mm. Es ist bevorzugt, dass eine Breitenausdehnung der Überwachungskomponente sich auf wenigstens 8 bzw. 9 bzw. 10 mm beläuft. Zweckmäßigerweise beträgt eine Breitenausdehnung der Überwachungskomponente höchstens 30 bzw. 25 bzw. 20 bzw. 15 mm. Es ist bevorzugt, dass eine Dickenausdehnung der Überwachungskomponente sich auf wenigstens 3 bzw. 4 bzw. 5 mm beläuft. Zweckmäßigerweise beträgt eine Dickenausdehnung der Überwachungskomponente höchstens 20 bzw. 15 bzw. 10 mm. Mit Vorteil erstreckt sich die Längsausdehnung in einer Richtung, welche einer Steckrichtung des Steckelements des Befestigungselements entspricht. Zweckmäßigerweise erstreckt sich die Breitenausdehnung der Überwachungskomponente in Richtung einer Längserstreckung eines Querschnitts des Steckelements des Befestigungselements. Zweckmäßigerweise erstreckt sich die Dickenausdehnung der Überwachungskomponente in einer Raumrichtung, welche senkrecht zu der Längsausdehnung und der Breitenausdehnung ist.

Die eingangs genannte Aufgabe wird gelöst durch ein Endgerätsystem, wobei das Endgerätsystem ein Endgerät und eine Überwachungskomponente - bevorzugt eine erfindungsgemäße Überwachungskomponente - umfasst. Das Endgerät ist vorzugsweise mit der Überwachungskomponente verbindbar bzw. verbunden. Mit Vorteil umfasst das Endgerätsystem ein Analysegerät. Das Vorsehen eines Endgerätsystems mit einem Analysegerät bewirkt eine direkte bzw. möglichstschnelle Information des Nutzers für eine entsprechend schnelle Gefahrenabwehr. Das Analysegerät ist vorzugsweise ein Endgerät und insbesondere ein mobiles Endgerät. Das Analysegerät ist beispielsweise als Smartphone, Tablet, Smartwatch oder dergleichen ausgebildet.

Mit Vorteil umfasst das Analysegerät eine Applikation zur Kommunikation mit der Überwachungskomponente. Es ist sehr bevorzugt, dass die Überwachungskomponente über das Analysegerät bzw. über die Applikation steuerbar ist. Mit Vorteil kann über das Analysegerät bzw. die Applikation ein Modus der Überwachungskomponente eingestellt werden. Es ist möglich, dass mithilfe des Analysegeräts die Überwachungskomponente - insbesondere manuell - aktivierbar ist. Vorzugsweise kann mithilfe des Analysegeräts bzw. der Applikation die Überwachungskomponente manuell und/oder automatisch in einen Alarmbereitschaftsmodus versetzt werden. Es ist sehr bevorzugt, dass das Analysegerät bzw. die Applikation Bewegungsdaten bzw. Sensordaten der Überwachungskomponente grafisch für einen Nutzer des Analysegeräts bzw. Endgeräts aufbereitet. Es ist sehr bevorzugt, dass das Endgerätsystem bzw. das Analysegerät bzw. die Überwachungskomponente mit einer Leitstelle verbunden bzw. verbindbar ist. Vorzugsweise umfasst das Endgerätsystem bzw. die Überwachungskomponente bzw. das Analysegerät eine Mobilfunkschnittstelle.

Die eingangs genannte Aufgabe wird gelöst durch ein Verfahren zur Überwachung eines Endgeräts, wobei das Endgerät mit einer Überwachungskomponente - insbesondere einer erfindungsgemäßen Überwachungskomponente - verbunden wird. Vorzugsweise wird die Überwachungskomponente per Steckverbindung und insbesondere per USB-Steckverbindung mit dem Endgerät verbunden. Es ist bevorzugt, dass ein Analysegerät - vorzugsweise per kabelloser Verbindung - mit dem Überwachungsgerät verbunden wird. Es ist von Vorteil, dass die Überwachungskomponente Bewegungsdaten des Endgeräts erfasst. Vorzugsweise übermittelt die Überwachungskomponente wenigstens einen Teil der Bewegungsdaten und/oder ein von den Bewegungsdaten abhängiges Signal an das Analysegerät.

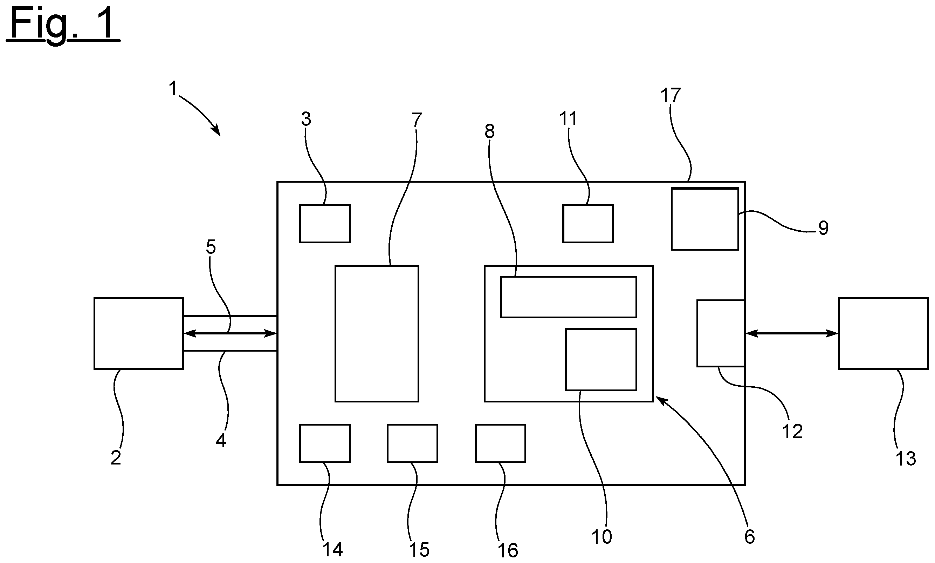

Nachfolgend wird die Erfindung anhand eines Ausführungsbeispiels mithilfe einer Figur näher erläutert. Es zeigt in schematischer Darstellung
- Figur 1: ein Blockschema einer erfindungsgemäßen Überwachungskomponente bzw. eines erfindungsgemäßen Endgerätsystems.

In Figur 1 sind eine erfindungsgemäße Überwachungskomponente 1, ein Endgerät 2 sowie ein Analysegerät 13 dargestellt, welche in diesem Ausführungsbeispiel zusammen ein Endgerätsystem 1, 2, 13 bilden. Das Endgerät 2 dieses Ausführungsbeispiels ist ein Laptop, wohingegen das Analysegerät 13 dieses Ausführungsbeispiels als Smartphone ausgestaltet ist. Die Überwachungskomponente 1 ist besonders vorzugsweise als USB-Stick ausgebildet und umfasst zweckmäßigerweise ein Befestigungselement 4, welches insbesondere als USB-Stecker ausgebildet sein kann. Das Befestigungselement 4 ist mit dem Endgerät 2 bzw. mit einer USB-Schnittstelle des Endgeräts 2 verbunden bzw. verbindbar.

Die Überwachungskomponente 1 bzw. das Befestigungselement 4 umfasst bevorzugt eine Endgerätschnittstelle 5 zum Empfang von Strom und/oder zum Austausch von Daten. Die Endgerätschnittstelle 5 umfasst zweckmäßigerweise eine normierte Anordnung von elektrischen Kontakten und ist vorzugsweise als USB-Schnittstelle ausgebildet. Anhand von Figur 1 ist erkennbar, dass insbesondere das Endgerät 2 sehr schematisch dargestellt ist, was beispielsweise an den Größenproportionen erkennbar ist. So ist die Überwachungskomponente 1 typischerweise sehr viel kleiner (eben etwa in der Größe eines USB-Sticks) als das Endgerät 2 in Form eines Laptops bzw. Notebooks ausgestaltet.

Es ist sehr bevorzugt, dass die Überwachungskomponente 1 eine - vorzugsweise kabellose - Analyseschnittstelle 12, umfasst. Die Analyseschnittstelle 12 ist bevorzugt als Funkschnittstelle, beispielsweise als Bluetooth-Schnittstelle und/oder WLAN-Schnittstelle und/oder MobilfunkSchnittstelle ausgebildet. Es ist sehr bevorzugt, dass das Analysegerät 13 und die Analyseschnittstelle 12 miteinander verbunden bzw. verbindbar sind.

Die Überwachungskomponente 1 umfasst erfindungsgemäß einen Bewegungssensor 3. Der Bewegungssensor 3 ist bevorzugt als Beschleunigungssensor ausgestaltet, wobei weiter vorzugsweise über einen Integrator aus den ermittelten Beschleunigungswerten Geschwindigkeitswerte bestimmt werden. Mit Vorteil ist der Bewegungssensor 3 bzw. der Beschleunigungssensor ausgebildet, die Bewegungen bzw. Beschleunigungen in wenigstens einer bzw. wenigstens zwei bzw. wenigstens drei Raumrichtungen zu ermitteln. Der Bewegungssensor 3 bzw. der Beschleunigungssensor dieses Ausführungsbeispiels ist mit Vorteil als Mikro-Elektro-Mechanisches System (MEMS) ausgebildet und weist mit Vorteil wenigstens einen Biegesteg aus - vorzugsweise - Silizium auf. Es ist sehr bevorzugt, dass der Bewegungssensor3 bzw. Beschleunigungssensor eine Kapazität zwischen dem wenigstens einen Biegesteg und einem Referenzpunkt ermittelt, um auf eine Beschleunigung zu schließen.

Es ist sehr vorteilhaft,dass die Überwachungskomponente 1 einen Prozessor 7 und/oder einen Speicher 6 und/oder einen Akku 9 umfasst. Besonders vorzugsweise umfasst der Speicher 6 ein Betriebssystem 8. Hierdurch kann die Überwachungskomponente 1 autonom - insbesondere gegenüber dem Endgerät2 - agieren. Durch das Vorsehen eines Akkus 9 wird erreicht, dass die Überwachungskomponente 1 nicht nur hinsichtlich des Datenflusses, sondern auch hinsichtlich des Stromflusses autonom gegenüber dem Endgerät 2 handeln kann. So wird insbesondere gewährleistet, dass bei einem ausgeschalteten Laptop/Notebook und damit bei einer deaktivierten USB-Schnittstelle des Laptops trotz ausbleibenden USB-Strom die Überwachungskomponente 1 weiterhin funktionsfähig ist. Letztlich ist mit den vorgenannten Komponenten die Überwachungskomponente 1 als Miniatur-Endgerät zu betrachten, welches nicht von dem Zustand des Endgeräts 2 abhängig ist.

Mit Vorteil umfasst die Überwachungskomponente 1 einen Zeitgeber 11. Es ist bevorzugt, dass die Überwachungskomponente 1 bzw. der Speicher 6 eine Logdatei 10 aufweist. Es ist von Vorteil, dass die von dem Bewegungssensor 3 erfassten Daten mithilfe des Zeitgebers 11 in der Logdatei 10 protokolliert werden. Auf diese Weise können insbesondere detektierte Bewegungen einer bestimmten Uhrzeit minuten- und/oder sogar sekundengenau zugeordnet werden.

Vorzugsweise umfasst das Analysegerät 13 eine Applikation, mit welcher auf die Überwachungskomponente 1 zugegriffen werden kann bzw. über welche die Überwachungskomponente 1 Daten an das Analysegerät 13 sendet. Vorzugsweise kann mithilfe des Analysegeräts 13 die Überwachungskomponente 1 aktiviert werden, sodass Bewegungsdaten ab dem Moment der Aktivierung durch die Überwachungskomponente 1 protokolliert werden. Es ist sehr bevorzugt, dass die Überwachungskomponente 1 mithilfe des Analysegeräts 13 von einem aktivierten oder deaktivierten bzw. ausgeschalteten Modus in einen Alarmbereitschaftsmodus überführbar ist.

Die Überwachungskomponente 1 ist vorteilhafterweise ausgebildet, bei einer detektierten Bewegung in dem Alarmbereitschaftsmodus ein Alarmsignal auszugeben. Das Alarmsignal wird vorzugsweise von der Überwachungskomponente 1 an das Analysegerät 13 und/oder an eine Leitstelle übermittelt. Es ist von Vorteil, dass der Alarmbereitschaftsmodus automatisch herstellbar ist. Vorzugsweise wird der Alarmbereitschaftsmodus hergestellt, wenn eine bestimmte Entfernung zwischen der Überwachungskomponente 1 und dem Analysegerät 13 überschritten wird. Es ist beispielsweise möglich, dass bei Abbruch einer kabellosen Verbindung zwischen der Überwachungskomponente 1 und dem Analysegerät 13 der Alarmbereitschaftsmodus automatisch hergestellt wird. Verlässt beispielsweise der Nutzer mit dem Analysegerät 13 sein Hotelzimmer, so bricht die kabellose Verbindung zwischen der Überwachungskomponente 1 bzw. der Analyseschnittstelle 12 einerseits und dem Analysegerät 13 ab und der Alarmbereitschaftsmodus wird von der Überwachungskomponente 1 automatisch hergestellt.

Die Überwachungskomponente 1 kann wenigstens einen weiteren Sensor 14, 15, 16 umfassen. Der wenigstens eine weitere Sensor 14, 15, 16 kann ein Wärmefühler 14 und/oder eine Kamera 15 und/oder ein Mikrofon 16 sein. Zweckmäßigerweise protokolliert die Überwachungskomponente 1 die Daten des wenigstens einen weiteren Sensors 14, 15, 16. Vorzugsweise weist die Überwachungskomponente 1 ein Gehäuse 17 auf. Das Gehäuse 17 umschließt vorzugsweise den Speicher 6 und/oder den Prozessor 7 und/oder den Bewegungssensor 3 und/oder den Akku 9 und/oder den wenigstens einen weiteren Sensor 14, 15, 16.

### Bezugszeichenliste

- 1: Überwachungskomponente
- 2: Endgerät
- 3: Bewegungssensor
- 4: Befestigungselement
- 5: Endgerätschnittstelle
- 6: Speicher
- 7: Prozessor
- 8: Betriebssystem
- 9: Akku
- 10: Logdatei
- 11: Zeitgeber
- 12: Analyseschnittstelle zur Verbindung mit 13
- 13: Analysegerät
- 14: Wärmefühler
- 15: Kamera
- 16: Mikrofon
- 17: Gehäuse

## Patentansprüche

1. Überwachungskomponente (1) zur Überwachung eines Endgeräts (2), wobei die Überwachungskomponente (1) ein Befestigungselement (4) zur Befestigung an einem Endgerät (2) umfasst, wobei das Befestigungselement(4) so ausgebildet ist, dass sich Bewegungen des Endgeräts (2) auf die Überwachungskomponente (1) übertragen,
**dadurch gekennzeichnet, dass**
die Überwachungskomponente (1) einen Bewegungssensor (3) aufweist, wobei der Bewegungssensor (3) ausgebildet ist, Bewegungen der Überwachungskomponente (1) bzw. des Endgeräts (2) zu erfassen.

2. Überwachungskomponente (1) nach Anspruch 1, wobei der Bewegungssensor (3) einen Beschleunigungssensor und vorzugsweise einen Integrator zur Bestimmung einer Bewegung aus einer erfassten Beschleunigung umfasst.

3. Überwachungskomponente (1) nach Anspruch 1 oder 2, wobei die Überwachungskomponente (1) bzw. das Befestigungselement (4) eine Endgerätschnittstelle (5) zum Empfang von Strom und/oder zum Austausch von Daten zwischen dem Endgerät (2) und der Überwachungskomponente (1) umfasst.

4. Überwachungskomponente (1) nach einem der Ansprüche 1 bis 3, wobei die Überwachungskomponente (1) ausgebildet ist, unabhängig von einem Endgerät (2) betreibbar zu sein, wobei die Überwachungskomponente (1) vorzugsweise einen Prozessor (7) und/oder ein Betriebssystem (8) und/oder einen Akku (9) umfasst.

5. Überwachungskomponente (1) nach einem der Ansprüche 1 bis 4, wobei die Überwachungskomponente (1) einen Speicher (6), vorzugsweise einen kryptographisch gesicherten Speicher (6), aufweist, wobei die Überwachungskomponente (1) bzw. der Speicher (6) vorzugsweise eine Logdatei (10) aufweist, wobei die Überwachungskomponente (1) bevorzugt einen Zeitgeber (11) umfasst.

6. Überwachungskomponente (1) nach einem der Ansprüche 1 bis 5, wobei die Überwachungskomponente (1) eine - vorzugsweise kabellose - Analyseschnittstelle (12), insbesondere eine Funkschnittstelle, zur Verbindung mit einem Analysegerät (13) und/oder einer Leitstelle aufweist.

7. Überwachungskomponente (1) nach einem der Ansprüche 1 bis 6, wobei die Überwachungskomponente (1) wenigstens einen weiteren Sensor (14, 15, 16) umfasst, wobei der wenigstens eine weitere Sensor (14, 15, 16) einen Wärmefühler(14) und/oder eine Kamera (15) und/oder ein Mikrofon (16) und/oder einen Endgerätdetektor aufweist.

8. Überwachungskomponente (1) nach einem der Ansprüche 1 bis 7, wobei die Überwachungskomponente (1) als Stick - insbesondere als ein USB-Stick - ausgebildet ist.

9. Endgerätsystem (1, 2, 13), wobei das Endgerätsystem (1, 2, 13) ein Endgerät (2) und eine Überwachungskomponente (1) - bevorzugt eine Überwachungskomponente(1) nach einem der Ansprüche 1 bis 8 - umfasst, wobei das Endgerät (2) mit der Überwachungskomponente (1) verbindbar bzw. verbunden ist, wobei das Endgerätsystem (2, 1, 13) vorzugsweise ein Analysegerät (13) umfasst.

10. Verfahren zur Überwachungeines Endgeräts (2), wobei das Endgerät(2) mit einer Überwachungskomponente (1) - insbesondere einer Überwachungskomponente (1) nach einem der Ansprüche 1 bis 8 - verbunden wird.
